# EUROPEAN PATENT APPLICATION

(11) **EP 2 765 553 A1**
(43) Date of publication of application: **13.08.2014**
(21) Application number: 14152323.3
(22) Date of filing: 23.01.2014
(51) Int. Cl.: G06Q 50/10, G06Q 90/00, H04L 29/06, H04N 7/15

(54) **Information processing system, information processing method and computer program product**

(30) Priority: 06.02.2013 JP 2013021831; 06.12.2013 JP 2013253041
(71) Applicant: Ricoh Company Ltd., Tokyo 143-8555 (JP)
(72) Inventor: Usui, Shuuichi, Tokyo 143-8555 (JP)
(74) Representative: Leeming, John Gerard

(57) **Abstract**

An information processing system includes an obtaining unit, a first storage unit, and a usage value converter. The obtaining unit obtains, from a service providing unit which provides a service, pieces of fourth information each including first information, second information and third information that are associated with one another. The first information indicates a type of the service, the second information is used for identifying a user to whom the service is provided, and the third information indicates a usage situation of the service. The first storage unit stores therein fifth information indicating a type of an output format of the third information so as to be associated with each piece of the first information. The usage value converter performs conversion to convert the third information included in the fourth information to a usage value indicating a usage frequency of the service based on the fifth information corresponding to the first information included in the fourth information and associates the first information and the second information included in the fourth information with the usage value obtained by the conversion so as to register them in a second storage unit.

## Description

The present invention relates to an information processing system, an information processing method, and a computer program product.

Conventionally, there is known technology to collect information indicating a usage situation of a plurality of services contracted by a user (for example, information such as a usage log) and calculate a fee for the service based on the collected information.

However, the conventional technology has a problem that a mechanism for managing the information indicating the usage situation of each service in a standardized manner is not present.

Therefore, there is a need for an information processing system and the information processing method capable of managing information indicting a usage situation of each service in a standardized manner.

According to an embodiment, an information processing system includes an obtaining unit, a first storage unit, and a usage value converter. The obtaining unit obtains, from a service providing unit which provides a service, pieces of fourth information each including first information, second information and third information that are associated with one another. The first information indicates a type of the service, the second information is used for identifying a user to whom the service is provided, and the third information indicates a usage situation of the service. The first storage unit stores therein fifth information indicating a type of an output format of the third information so as to be associated with each piece of the first information. The usage value converter performs conversion to convert the third information included in the fourth information to a usage value indicating a usage frequency of the service based on the fifth information corresponding to the first information included in the fourth information and associates the first information and the second information included in the fourth information with the usage value obtained by the conversion so as to register them in a second storage unit.

The above and other objects, features, advantages and technical and industrial significance of this invention will be better understood by reading the following detailed description of presently preferred embodiments of the invention, when considered in connection with the accompanying drawings, in which:
FIG. 1 is a view of a schematic configuration example of an information processing system of an embodiment;
FIG. 2 is a view of a functional configuration example of a server device;
FIG. 3 is a view of a functional configuration example of a usage log managing unit;
FIG. 4A is a view for illustrating an example of a specific process by the usage log managing unit;
FIG. 4B is a view for illustrating an example of the specific process by the usage log managing unit;
FIG. 5 is a flowchart of an operation example of the usage log managing unit; and
FIG. 6 is a view for illustrating an example of a report provided to a user.

An embodiment will be described below in detail with reference to the accompanying drawings.

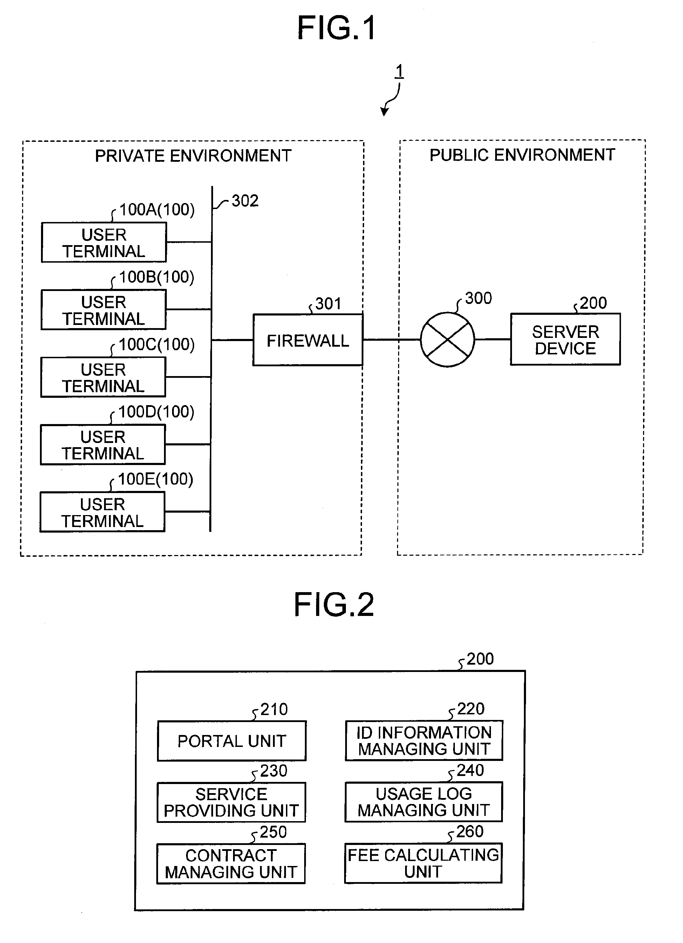

FIG. 1 is a block diagram of a configuration example of an information processing system 1 of this embodiment. As illustrated in FIG. 1, the information processing system 1 includes user terminals 100 and a server device 200 capable of providing various services. The user terminals 100 and the server device 200 may be connected to each other through a network 300 in a public environment such as the Internet, for example.

More specifically, a plurality of user terminals 100A to 100E is connected to a network 302 in a private environment such as a local area network (LAN) and an intranet, for example, and the server device 200 is connected to the network 300 in the public environment such as the Internet, for example.

For example, the network 302 in the private environment corresponding to an intra-firm network of a customer is connected to the network 300 in the public environment through a firewall 301, and according to this, the user terminals 100A to 100E and the server device 200 may be connected to each other. Meanwhile, a cloud environment is an example of the public environment. In a following description, when it is not necessary to distinguish the user terminals 100A to 100E from one another, they are sometimes simply referred to as the "user terminals 100".

An example of the user terminal 100 includes a PC, a mobile terminal, an image forming apparatus, a television conference system, a projector, an IC recorder and the like. The user terminal 100 transmits a service execution request to the server device 200, and according to this, a service providing unit 230 to be described later in the server device 200 may execute a predetermined processing in cooperation with at least one user terminal 100 as needed, thereby providing a service to the user terminal 100.

Meanwhile, there is a case in which the server device 200 also transmits a request to the user terminal 100 depending on a type of the service to be provided. However, when the network 302 is connected to the network 300 through the firewall 301 as in the information processing system 1 illustrated in FIG. 1, the server device 200 cannot transmit the request to the user terminal 100.

Therefore, when the network 302 is connected to the network 300 through the firewall 301, the user terminal 100 connected to the network 302 may poll the server device 200 to receive the request from the server device 200. In addition, when the network 302 is connected to the network 300 through the firewall 301, the user terminal 100 connected to the network 302 and the server device 200 may establish communication with each other by using extensible messaging and presence protocol (XMPP). The XMPP includes technology referred to as BOSH (bidirectional-streams over synchronous HTTP) for transmitting and receiving a message by using HTTP. The server device 200 may implement a push function which is not provided in general (not a function of the user terminal 100 to receive the request but a function of the server device 200 to asynchronously transmit the request to an electronic device).

FIG. 2 is a block diagram of a functional configuration example of the server device 200. As illustrated in FIG. 2, the server device 200 includes a portal unit 210, an ID information managing unit 220, a service providing unit 230, a usage log managing unit 240, a contract managing unit 250, and a fee calculating unit 260.

The portal unit 210 serves as a portal (window) of service provision to each user terminal 100. When accepting the service request to request the service from the user terminal 100, the portal unit 210 transmits the accepted service request to the ID information managing unit 220. In this embodiment, the service request includes first information indicating a type of the service and second information used for identifying the user to whom the service is provided.

The first information may also be regarded as information indicating a classification of a contract type. For example, when the user requests a television conference service to use a dedicated terminal (in a following description, also sometimes referred to as a "dedicated machine television conference service"), the service request includes the first information indicating that the type of the service is the "dedicated machine television conference service". In short, information capable of identifying the type of the service may be used as the first information and this may be, for example, a license agreement number capable of uniquely specifying the type of the service.

For example, the second information may be a telephone number used in a call service, information for identifying a device used for providing a specific service, such as a television conference terminal used for providing the television conference service, (for example, a serial number and the like) and the like, but the second information is not limited thereto. For example, when the user requests the above-described dedicated machine television conference service, the service request includes the serial number of the dedicated terminal used for the dedicated machine television conference service. In short, information used for identifying the user to whom the service is provided may be used as the second information.

In this embodiment, a pair of the first information and the second information is used as information indicating authority to use the service. The ID information managing unit 220 has a function of managing pairs of the first information and the second information registered in advance in a database unit not illustrated and of authenticating the user terminal 100 which requests the service.

More specifically, when receiving a service request from the portal unit 210, the ID information managing unit 220 determines whether a pair of the first information of the second information included in the received service request is present in a plurality of pairs (i.e., the pairs of the first information and the second information) registered in advance in the database unit. When the ID information managing unit 220 determines that the pair of the first information and the second information included in the service request is present in the pairs registered in advance in the database unit, the ID information managing unit 220 authenticates the user terminal 100 which transmits the service request (determines that the user terminal 100 has an authority to get the service). When the ID information managing unit 220 authenticates the user terminal 100, the ID information managing unit 220 passes the service request received from the portal unit 210 to the service providing unit 230.

Meanwhile, the service request may include the first information and service information corresponding to the second information (for example, an e-mail address corresponding to the telephone number (corresponding to the second information) and the like), for example, and the server device 200 may include a storage device in which correspondence relationship information indicating correspondence relationship between the second information and the service information is stored. In this configuration, when receiving the service request from the portal unit 210, the ID information managing unit 220 may refer to the correspondence relationship information to specify (determine) the second information corresponding to the service information included in the received service request. Then, the ID information managing unit 220 may determine whether the pair of the second information specified by the service information included in the service request and the first information included in the service request is present in a plurality of pairs (pairs of the first information and the second information) registered in advance in the database unit not illustrated.

Although the ID information managing unit 220 has the function of authenticating the user terminal 100 which requests the service (authentication function) in this embodiment, the authentication function is not limited thereto and may also be installed on a function module other than the ID information managing unit 220, for example.

The service providing unit 230 has a function of providing (executing) the service based on the service request passed from the ID information managing unit 220. In this embodiment, the service providing unit 230 executes the service corresponding to the pair of the first information and the second information included in the service request. Then, the service providing unit 230 outputs, to the usage log managing unit 240 at a predetermined interval, fourth information including the first information, the second information, and third information indicating a usage situation of the service (for example, in a case of the dedicated machine television conference service, information indicating connection time to a counterpart of the television conference) that are associated with one another. The third information may also be a usage log and the like, for example.

The usage log in this example may be considered as information obtained by outputting the usage situation of the service in units of pair of the first information and the second information for charging. The service providing unit 230 may also add time information indicating a target period (information indicating time elapsed from a previous output, for example) to the fourth information so as to output the same to the usage log managing unit 240.

The usage log managing unit 240 manages the usage situation of the service for each pair of the first information and the second information based on the fourth information transmitted from the service providing unit 230. A specific content of the usage log managing unit 240 is described below.

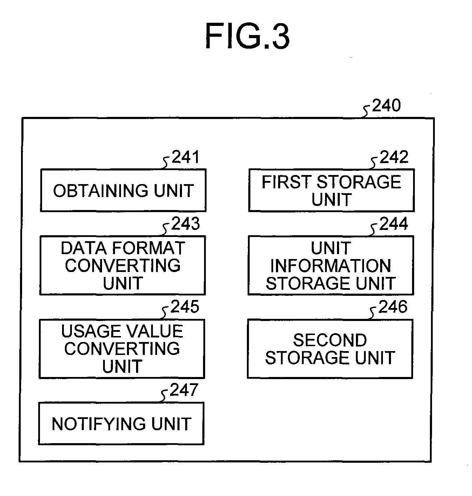

FIG. 3 is a view of an example of a functional configuration of the usage log managing unit 240. As illustrated in FIG. 3, the usage log managing unit 240 includes an obtaining unit 241, a first storage unit 242, a data format converting unit 243, a unit information storage unit 244, a usage value converting unit 245, a second storage unit 246, and a notifying unit 247.

The obtaining unit 241 obtains, from the service providing unit 230, the fourth information in which the first information, the second information, and the third information are associated with one another.

The first storage unit 242 stores therein fifth information indicating a type of an output format of the third information so as to be associated with each piece of the first information (each type of the service). In this embodiment, there are three types as the types of the output format of the third information. More specifically, there are the three types: a first type to directly output the usage value indicating a usage frequency of the service; a second type to output a first count value (start count value) indicating the usage amount of the service corresponding to a start point of a certain period and a second count value (end count value) indicating the usage amount of the service up to an end point of the certain period; and a third type to output only a third count value indicating the usage amount of the service up to the present time. In this example, the fifth information associated with each piece of the first information in the first storage unit 242 is information specifying any one of the first type, the second type, and the third type.

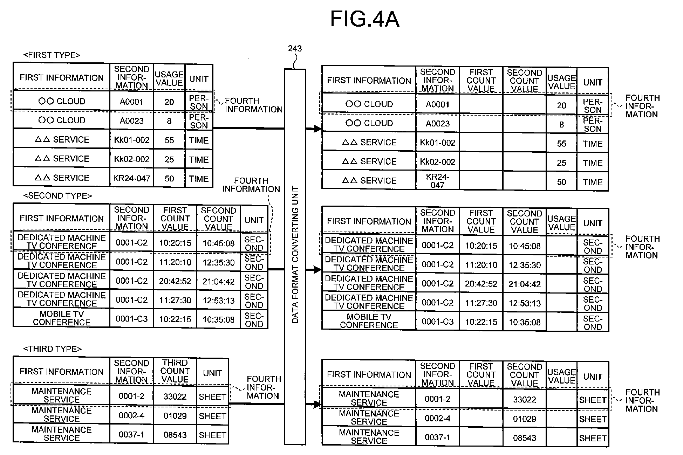

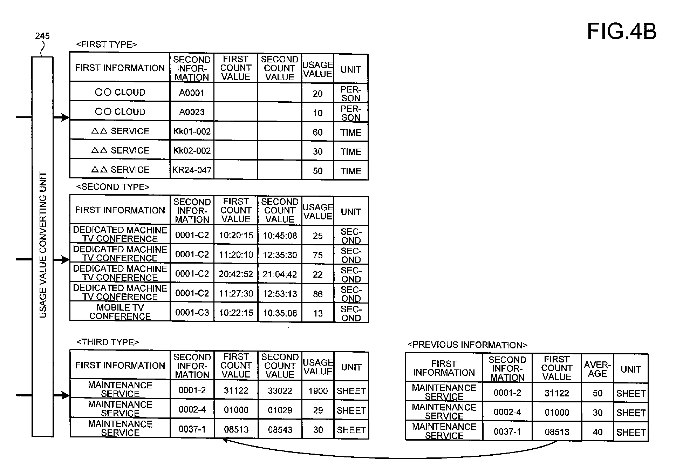

The data format converting unit 243 converts a data format of the fourth information obtained by the obtaining unit 241 to a common data format common to all the types of the service. In this embodiment, the common data format is the data format in which the first information, the second information, the first count value (start count value), the second count value, (end count value), the usage value indicating the usage frequency of the service, and a unit of the third information are associated with one another (refer to FIGS. 4A and 4B to be described later), but the common data format is not limited to this. Herein, the third count value is regarded as a synonym of the second count value.

The unit information storage unit 244 stores therein unit information indicating a unit of the usage value so as to be associated with each piece of the first information (each type of the service). For example, the unit information indicating that the unit of the usage value is "minute" is associated with the first information indicating the above-described "dedicated machine television conference service".

Meanwhile, the unit of the usage value might be different from the unit of the third information described above. For example, the unit of the usage value regarding the "dedicated television conference service" might be "minute" while the unit of the third information regarding the "dedicated television conference service" described above is "second". This is because the unit of the usage value is determined in accordance with a unit of charging. For example, in a case of the above-described "dedicated television conference service", not the charging per second but the charging per minute is applied. That is to say, the unit of the usage value is determined based on the charging per one usage value.

The usage value converting unit 245 converts the third information (information indicating the usage situation of the service such as the usage log, for example) included in the fourth information to the usage value indicating the usage frequency of the service based on the fifth information corresponding to the first information included in the fourth information obtained by the obtaining unit 241. More specifically, this is performed as follows.

The usage value converting unit 245 reads the fifth information corresponding to the first information included in the fourth information obtained by the obtaining unit 241 from the first storage unit 242. When the read fifth information indicates the above-described first type, the usage value converting unit 245 determines a value corresponding to the usage value included in the fourth information obtained by the obtaining unit 241 as the usage value.

When the read fifth information indicates the above-described second type, the usage value converting unit 245 determines a value corresponding to a difference between the second count value (end count value) and the first count value (start count value) included in the fourth information obtained by the obtaining unit 241 as the usage value.

Further, when the read fifth information indicates the above-described third type, the usage value converting unit 245 determines a value corresponding to a difference between the third count value included in the fourth information obtained by the obtaining unit 241 and a previous third count value as the usage value. Herein, the usage value converting unit 245 has a function of holding the previous third count value for each pair of the first information and the second information, but a method of holding the previous third count is optional.

In this embodiment, the usage value converting unit 245 performs the conversion based on the unit information corresponding to the first information included in the fourth information obtained by the obtaining unit 241. More specifically, the usage value converting unit 245 reads the fifth information corresponding to the first information included in the fourth information obtained by the obtaining unit 241 from the first storage unit 242, reads the unit information corresponding to the first information from the unit information storage unit 244, and converts the third information included in the fourth information to the usage value based on the read fifth information and the unit information. In more detail, this is performed as follows.

For example, when the fifth information read from the first storage unit 242 indicates the above-described first type, the usage value converting unit 245 converts the usage value included in the fourth information (an original usage value) according to the unit information read from the unit information storage unit 244 and determines the converted value as the usage value. For example, the usage value converting unit 245 may also perform rounding determined in advance (for example, to round up the unit of the usage value to "10") for the converted value. For example, when the unit of the usage value included in the fourth information is the same as the unit indicated by the unit information, it is also possible to directly determine the usage value included in the fourth value as the usage value.

When the fifth information read from the first storage unit 242 indicates the above-described second type, for example, the usage value converting unit 245 converts the value indicating the difference between the second count value and the first count value included in the fourth information according to the unit information read from the unit information storage unit 244 and determines the converted value as the usage value.

When the fifth information read from the first storage unit 242 indicates the above-described third type, the usage value converting unit 245 converts the value indicating the difference between the third count value included in the fourth information and the previous third count value (the third count value corresponding to the pair of the first information and the second information included in the fourth information obtained by the obtaining unit 241 just before the fourth information is obtained) according to the unit information read from the unit information storage unit 244 and determines the converted value as the usage value. Herein, for example, when a difference between the determined usage value and a predetermined reference value (although this is an average value up to the present time in this example, the reference value is not limited to this and may also be a maximum value up to the present time, for example) is equal to or larger than a threshold, the usage value converting unit 245 may determine that the determined usage value is an abnormal value (error).

In this embodiment, the usage value converting unit 245 performs the conversion by using the fourth information expressed in the common data format (a concept included in the fourth information obtained by the obtaining unit 241). More specifically, the usage value converting unit 245 performs the conversion based on the fifth information corresponding to the first information included in the fourth information converted to the common data format by the data format converting unit 243 and the unit information corresponding to the first information.

Meanwhile, for example, the conversion according to the unit information corresponding to the first information included in the fourth information obtained by the obtaining unit 241 may not be performed, and in this case, the usage value converting unit 245 performs the conversion based on the fifth information corresponding to the first information included in the fourth information expressed in the common data format.

Further, the conversion of the data format of the fourth information obtained by the obtaining unit 241 to the common data format may not be performed, and in this case, the usage value converting unit 245 performs the conversion based on the fifth information corresponding to the first information included in the fourth information obtained by the obtaining unit 241 and the unit information corresponding to the first information.

Furthermore, for example, the conversion according to the unit information corresponding to the first information included in the fourth information obtained by the obtaining unit 241 may not be performed and the conversion of the data format of the fourth information to the common data format may not be performed, and in this case, the usage value converting unit 245 performs the conversion based on the fifth information corresponding to the first information included in the fourth information obtained by the obtaining unit 241.

The usage value converting unit 245 associates the first information and the second information included in the fourth information obtained by the obtaining unit 241 with the usage value obtained by the conversion so as to register them in the second storage unit 246. That is to say, the second storage unit 246 associates the first information, the second information, and the usage value with one another to store (from a different point of view, the second storage unit 246 stores therein the usage value so as to be associated with each pair of the first information and the second information). In this embodiment, a format of data indicating correspondence relationship among the first information, the second information, and the usage value stored in the second storage unit 246 is set to the common data format, but the format is not limited thereto. For example, the second storage unit 246 may stored therein the time information (the information indicating the target period (a usage period, for example) so as to be associated with the data indicating the correspondence relationship among the first information, the second information, and the usage value.

The notifying unit 247 has a function of notifying the fee calculating unit 260 of the usage value corresponding to the pair of the first information and the second information in response to a request from the fee calculating unit 260 which calculates a fee for the service.

Referring back to FIG. 2, the explanation is continued. The contract managing unit 250 associates contract information including a content of a contracted service, a contract period, information indicating a unit period corresponding to an interval to charge the fee and the like with each pair of the first information and the second information registered in advance in the database unit not illustrated so as to manage them. For example, when the contract managing unit 250 determines that it is time to charge the fee for the service corresponding to each pair based on the contract condition corresponding to the pair, this requests the fee calculating unit 260 to calculate the fee for the service corresponding to the pair.

The fee calculating unit 260 requests the usage value corresponding to the pair of the first information and the second information from the usage log managing unit 240 in response to the request from the contract managing unit 250. The fee calculating unit 260 has a function of calculating the fee for the service corresponding to the pair based on the usage value obtained from the usage log managing unit 240. When the service fee is calculated, the fee for the service corresponding to the pair is calculated by multiplying the charged fee per one usage value, which is separately stored for each piece of the first information, by the usage value.

In this embodiment, a hardware configuration of a computer device provided with a CPU, a ROM, a RAM and the like is used as a hardware configuration of the server device 200. A function of each unit (the portal unit 210, the ID information managing unit 220, the service providing unit 230, the usage log managing unit 240 (the obtaining unit 241, the data format converting unit 243, the usage value converting unit 245, and the notifying unit 247), the contract managing unit 250, and the fee calculating unit 260) of the above-described server device 200 is implemented by the CPU reading a program stored in the ROM and the like and expanding the same on the RAM to execute. However, the configuration is not limited thereto and it is also possible that at least a part of the function of each unit of the server device 200 is implemented by a dedicated hardware circuit, for example. Each of the first storage unit 242, unit information storage unit 244, and second storage unit 246 may also be implemented by an auxiliary storage device such as the ROM, the RAM, and a HDD.

Next, an example of a specific processing performed by the usage log managing unit 240 according to this embodiment is described with reference to FIGS. 4A and 4B. As illustrated in FIG. 4A, in this example, the fifth information (the information indicating the type of the output format of the third information) corresponding to each of the first information indicating that the type of the service is "○○ cloud" and the first information indicating that the type of the service is "□□ service" indicates the first type. That is to say, for example, the third information corresponding to the pair of the first information indicating that the type of the service is the "○○ cloud" and the second information indicating the information used for identifying the user to whom the "○○ cloud" is provided indicates the usage value itself.

For example, as illustrated in FIG. 4A, the usage value indicating "20 persons" is associated with the pair of the first information indicating that the type of the service is the "○○ cloud" and the second information indicating that the information used for identifying the user to whom the "○○ cloud" is provided is "A0001" to form the fourth information. In an example in FIG. 4A, the data format of the first type is the data format in which the first information, the second information, the usage value, and the unit ("person" or "time") of the third information (the usage value itself in this example) are associated with one another.

Further, in this example, the fifth information corresponding to each piece of the first information indicating that the type of the service is the "dedicated machine television conference" and the first information indicating that the type of the service is the "mobile television conference" indicates the second type. That is to say, for example, the third information corresponding to the pair of the first information indicating that the type of the service is the "dedicated machine television conference" and the second information indicating the information used for identifying the user to whom the "dedicated machine television conference" is provided indicates the first count value (start count value) indicating the usage amount of the service corresponding to the start point of the certain period and the second count value (end count value) indicating the usage amount of the service up to the end point of the certain period.

For example, as illustrated in FIG. 4A, the first count value indicating "10 hours 20 minutes and 15 seconds" and the second count value indicating "10 hours 45 minutes and 8 seconds" are associated with the pair of the first information indicating that the type of the service is the "dedicated machine television conference" and the second information indicating that the information used for identifying the user to whom the "dedicated machine television conference" is provided (in this example, the serial number for identifying the dedicated terminal used for the dedicated machine television conference) is "0001-C2" to form the fourth information. In the example in FIG. 4A, the data format of the second type is the data format in which the first information, the second information, the first count value, the second count value, and the unit ("second") of the third information (in this example, the first count value and the second count value) are associated with one another.

Still further, in this example, the fifth information corresponding to the first information indicating that the type of the service is a "maintenance service" indicates the third type. That is to say, for example, the third information corresponding to the pair of the first information indicating that the type of the service is the "maintenance service" and the second information indicating the information used for identifying the user to whom the "maintenance service" is provided indicates the third count value (a newest count value) indicating the usage amount of the service up to the present time.

For example, as illustrated in FIG. 4A, the third count value indicating "33022 sheets" is associated with the pair of the first information indicating that the type of the service is the "maintenance service" and the second information indicating that the information used for identifying the user to whom the "maintenance service" is provided (in this example, the serial number for identifying the device which is a target of the maintenance service) is "0001-2" to form the fourth information. In the example in FIG. 4A, the data format of the third type is the data format in which the first information, the second information, the third count value, and the unit ("sheet") of the third information (in this example, the third count value) are associated with one another.

The data format converting unit 243 converts the data format of the fourth information from the service providing unit 230 to the common data format common to all the types of the service. In the example in FIG. 4A, the common data format is the data format in which the first information, the second information, the first count value, the second count value (regarded as the synonym of the third count value in this example), the usage value, and the unit of the third information are associated with one another. For example, when the data format of the fourth information corresponding to the first type (the fourth information including the first information corresponding to the fifth information indicating the first type) is converted to the common data format, information is not input to an item corresponding to each of the first count value and the second count value out of the common data format. For example, when the data format of the fourth information corresponding to the second type is converted to the common data format, the information is not input to the item corresponding to the usage value out of the common data format. Further, for example, when the data format of the fourth information corresponding to the third type is converted to the common data format, the information is not input to the item corresponding to each of the first count value and the usage value out of the common data format.

Next, the usage value converting unit 245 converts the third information included in each piece of the fourth information expressed in the common data format to the usage value based on the fifth information corresponding to the first information included in the fourth information. For example, in the example in FIG. 4A, as for the fourth information including the pair of the first information indicating that the type of the service is the "○○ cloud" and the second information indicating that the information used for identifying the user to whom the "○○ cloud" is provided is "A0023", the fifth information corresponding to the first information included in the fourth information indicates the first type, so that the usage value itself is included as the third information in the fourth information expressed in the common data format. As illustrated in FIG. 4A, the usage value included in the fourth information (the fourth information expressed in the common data format including the pair of the first information indicating that the type of the service is the "○○ cloud" and the second information indicating that the information used for identifying the user to whom the "○○ cloud" is provided is "A0023") is "eight persons" and the unit information (information indicating the unit of the usage value) corresponding to the first information indicating that the type of the service is the "○○ cloud" indicates that the unit is "person", so that the usage value converting unit 245 may also directly determine the "eight persons" as the usage value. However, in this example, the usage value converting unit 245 performs the rounding to round up the unit of the usage value to "10", so that the usage value converting unit 245 converts "eight persons" to "10 persons". Then, the usage value converting unit 245 determines "10 persons" indicating the converted value as the usage value corresponding to the pair of the first information indicating that the type of the service is the "○○ cloud" and the second information indicating that the information used for identifying the user to whom the "○○ cloud" is provided is "A0023" (refer to FIG. 4B).

In the example in FIG. 4A, for example, as for the fourth information including the pair of the first information indicating that the type of the service is the "dedicated machine television conference" and the second information indicating that the serial number for identifying the dedicated terminal used for the "dedicated machine television conference" is "0001-C2", the fifth information corresponding to the first information included in the fourth information indicates the second type, so that the first count value and the second count value are included as the third information in the fourth information expressed in the common data format. As illustrated in FIG. 4A, the first count value and the second count value included in the fourth information (the fourth information including the pair of the first information indicating that the type of the service is the "dedicated machine television conference" and the second information indicating that the serial number for identifying the dedicated terminal used for the "dedicated machine television conference" is "0001-C2" expressed in the common data format) are "10 hours 20 minutes and 15 seconds" and "10 hours 45 minutes and 8 seconds", respectively, so that the value indicating the difference between the second count value and the first count value is "1493 seconds". In this example, the unit information corresponding to the first information indicating that the type of the service is the "dedicated machine television conference" indicates that the unit is "minute", so that the usage value converting unit 245 converts "1493 seconds" described above to minutes and determines "25 minutes" indicating the converted value as the usage value (refer to FIG. 4B).

In the example in FIG. 4A, for example, as for the fourth information including the pair of the first information indicating that the type of the service is the "maintenance service" and the second information indicating that the serial number of the device being the target of the maintenance service is "0001-2", the fifth information corresponding to the first information included in the fourth information indicates the third type, so that the second count value (the synonym of the third count value in this example) is included as the third information in the fourth information expressed in the common data format. As illustrated in FIG. 4A, the third count value included in the fourth information (the fourth information expressed in the common data format including the pair of the first information indicating that the type of the service is the "maintenance service" and the second information indicating that the serial number of the device which is the target of the maintenance service is "0001-2") is "33022 sheets". In this example, the usage value converting unit 245 sets "31122 sheets" indicating the previous third count value corresponding to the pair included in the fourth information as the first count value in the common data format and calculates the value indicating the difference between the second count value (a current third count value) and the first count value (the previous third count value) in the common data format as illustrated in FIG. 4B. In this example, the unit information corresponding to the first information indicating that the type of the service is the "maintenance service" indicates that the unit is "sheet", so that the usage value converting unit 245 does not have to convert the unit of the value indicating the calculated difference and the usage value converting unit 245 may directly determine the same as the usage value. In this example, the usage value converting unit 245 determines whether the value indicating the difference between the determined usage value ("1900 sheets" in this example) and the average value up to the present time ("50 sheets" in this example) is equal to or larger than the threshold ("10 sheets" and the like, for example). In the example in FIGS. 4A and 4B, the value indicating the difference between the determined usage value and the value indicating the average up to the present time ("1850 sheets") is equal to or larger than the threshold, so that the determined usage value may be determined to be the abnormal value (error).

In the above-described manner, the usage value converting unit 245 sequentially registers the data in the common data format in which the usage value obtained by the above-described conversion process is associated with each pair of the first information and the second information included in the fourth information from the service providing unit 230 in the second storage unit 246.

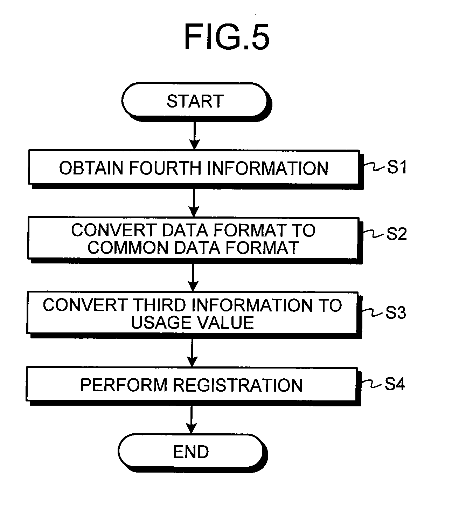

FIG. 5 is a flowchart of an operation example of the usage log managing unit 240. As illustrated in FIG. 5, the obtaining unit 241 first obtains the fourth information from the service providing unit 230 (step S1). Next, the data format converting unit 243 converts the data format of the fourth information obtained at step S1 to the common data format common to all the types of the service (step S2). Next, the usage value converting unit 245 performs the conversion to convert the third information included in the fourth information to the usage value based on the fifth information corresponding to the first information included in the fourth information converted to the common data format at step S2 and the unit information corresponding to the first information (step S3). Next, the usage value converting unit 245 associates the first information and the second information included in the fourth information obtained at step S 1 with the usage value obtained at step S3 to register them in the second storage unit 246 (step S4).

The above-described fee calculating unit 260 multiplies the charged fee per one usage value, which is separately stored for each piece of the corresponding first information, by the usage value registered in the second storage unit 246 in this manner, thereby calculating the fee for the service. When the fee is calculated, the fee for a plurality of services may be collectively calculated for each user or each company to which the user belongs. The usage values registered in the second storage unit 246 are standardized in accordance with the unit of charging, so that the fee is very easily calculated.

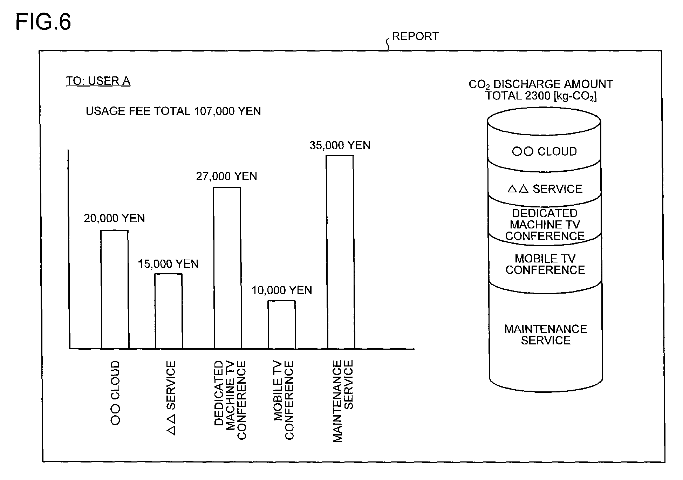

It also becomes easy to set another index (for example, a CO₂ discharge amount) per one usage value in addition to the charged fee per one usage value by using the usage values managed in a standardized manner, so that a report illustrated in FIG. 6 may be output, for example. An example of the report illustrated in FIG. 6 is an example of the report output for a certain user A in which CO₂ discharged by the provided service also is illustrated in addition to the fee for each provided service.

As described above, when the usage log managing unit 240 of this embodiment obtains, from the service providing unit 230, the fourth information in which the first information indicating the type of the service, the second information used for identifying the user to whom the service is provided, and the third information indicating the usage situation of the service are associated with one another, the usage log managing unit 240 converts the third information to the usage value indicating the usage frequency of the service based on the type of the output format of the third information included in the obtained fourth information (based on the fifth information corresponding to the first information included in the fourth information). This has an advantageous effect of enabling standardized management of the information indicating the usage situation of each service by associating the first information and the second information included in the fourth information with the usage value obtained by the conversion process to register them in the second storage unit 246.

While the embodiment according to the present invention has been described above, the present invention is not limited to the above-described embodiment and various modification may be made without departing from the spirit or scope of the general inventive concept. Various inventions may be formed by appropriate combination of a plurality of components disclosed in the above-described embodiment. For example, some components may be deleted from all the components described in the above-described embodiment.

### Modifications

Although the first storage unit 242 associates the fifth information indicating the type of the output format of the third information with each piece of the first information (each type of the service) to store them in the above-described embodiment, the first storage unit 242 is not limited thereto. The first storage unit 242 may associate the fifth information with each pair of the first information and the second information to store them, for example.

Similarly, although the unit information storage unit 244 associates the unit information indicating the unit of the usage value with each piece of the first information to store them in the above-described embodiment, the unit information storage unit 244 is not limited thereto. The unit information storage unit 244 may associate the unit information with each pair of the first information and the second information to store them, for example.

A function of each unit of the above-described server device 200 may be installed in a dispersed manner on one or more other devices. In short, it is sufficient when the information processing system according to the present invention includes the obtaining unit, the first storage unit, and the usage value converting unit. The obtaining unit obtains, from the service providing unit which provides the service, the fourth information including the first information indicating the type of the service, the second information used for identifying the user to which the service is provided, and the third information indicating the usage situation of the service that are associated with one another. The first storage unit stores therein the fifth information indicating the type of the output format of the third information so as to be associated with each piece of the first information. The usage value converting unit converts the third information included in the fourth information to the usage value indicating the usage frequency of the service based on the fifth information corresponding to the first information included in the fourth information and associates the first information and the second information included in the fourth information with the usage value obtained by the conversion process so as to register them in the second storage unit.

Meanwhile, the above-described embodiment and each modification may be optionally combined.

Various programs executed by the above-described server device 200 may be recorded on a computer readable medium such as a CD-ROM, a flexible disk (FD), a CD-R, a DVD (digital versatile disk), and a USB (universal serial bus) as a file in an installable format or an executable format to be provided or may be configured to be provided or distributed through the network such as the Internet. It is also possible to configure to provide the various programs in a manner embedded in advance in the ROM and the like.

According to the present invention, the information indicating the usage situation of each service may be managed in a standardized manner.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

The present application claims priority to and incorporates by reference the entire contents of Japanese Patent Application No. 2013-021831 filed in Japan on February 6, 2013 and Japanese Patent Application No. 2013-253041 filed in Japan on December 6, 2013.

## Claims

1. An information processing system comprising:
an obtaining unit configured to obtain, from a service providing unit which provides a service, pieces of fourth information each including first information, second information and third information that are associated with one another, the first information indicating a type of the service, the second information being used for identifying a user to whom the service is provided, and the third information indicating a usage situation of the service;
a first storage unit configured to store therein fifth information indicating a type of an output format of the third information so as to be associated with each piece of the first information; and
a usage value converter configured to perform conversion to convert the third information included in the fourth information to a usage value indicating a usage frequency of the service based on the fifth information corresponding to the first information included in the fourth information and associate the first information and the second information included in the fourth information with the usage value obtained by the conversion so as to register them in a second storage unit.

2. The information processing system according to claim 1, wherein
the type of the output format of the third information includes a first type to directly output the usage value, a second type to output a first count value indicating a usage amount of the service corresponding to a start point of a certain period and a second count value indicating the usage amount of the service up to an end point of the certain period, and a third type to output only a third count value indicating the usage amount of the service up to the present time.

3. The information processing system according to claim 2, wherein
when the fifth information corresponding to the first information included in the fourth information indicates the first type, the usage value converter determines a value corresponding to the usage value included in the fourth information as the usage value.

4. The information processing system according to claim 2, wherein
when the fifth information corresponding to the first information included in the fourth information indicates the second type, the usage value converter determines a value corresponding to a difference between the second count value and the first count value included in the fourth information as the usage value.

5. The information processing system according to claim 2, wherein
when the fifth information corresponding to the first information included in the fourth information indicates the third type, the usage value converter determines a value corresponding to a difference between the third count value included in the fourth information and the previous third count value as the usage value.

6. The information processing system according to any one of claims 1 to 5, further comprising:
a unit information storage unit configured to store therein unit information indicating a unit of the usage value so as to be associated with each piece of the first information, wherein
the usage value converter performs the conversion based on the unit information corresponding to the first information included in the fourth information.

7. The information processing system according to any one of claims 1 to 6, further comprising:
a data format converter configured to convert a data format of the fourth information obtained by the obtaining unit to a common data format common to all types of the service, wherein
the usage value converter performs the conversion by using the fourth information expressed in the common data format.

8. The information processing system according to any one of claims 1 to 7, further comprising:
a notifying unit configured to, in response to a request from a fee calculator to calculate a fee for the service, notify the fee calculator of the usage value corresponding to a pair of the first information and the second information.

9. An information processing method comprising:
obtaining, from a service providing unit which provides the service, pieces of fourth information each including first information, second information and third information that are associated with one another, the first information indicating a type of the service, the second information being used for identifying a user to whom the service is provided, and the third information indicating a usage situation of the service;
specifying fifth information corresponding to the first information included in the fourth information obtained at the obtaining by referring to a first storage unit that stores therein the fifth information indicating a type of an output format of the third information so as to be associated with each piece of the first information; performing conversion to convert the third information included in the fourth information to a usage value indicating a usage frequency of the service based on the specified fifth information; and
associating the first information and the second information included in the fourth information with the usage value obtained by the conversion process so as to register them in a second storage unit.

10. A computer program product comprising a non-transitory computer-readable medium containing a computer program, the program causing a computer to execute:
obtaining, from a service providing unit which provides the service, pieces of fourth information each including first information, second information and third information that are associated with one another, the first information indicating a type of the service, the second information being used for identifying a user to whom the service is provided, and the third information indicating a usage situation of the service;
specifying fifth information corresponding to the first information included in the fourth information obtained at the obtaining by referring to a first storage unit that stores therein the fifth information indicating a type of an output format of the third information so as to be associated with each piece of the first information; performing conversion to convert the third information included in the fourth information to a usage value indicating a usage frequency of the service based on the specified fifth information; and
associating the first information and the second information included in the fourth information with the usage value obtained by the conversion process so as to register them in a second storage unit.
